(19) **Europäisches Patentamt / European Patent Office / Office européen des brevets**

(11) **EP 3 853 001 B1**

(12) **FASCICULE DE BREVET EUROPEEN**

(45) Date de publication et mention de la délivrance du brevet:
**01.11.2023 Bulletin 2023/44**

(21) Numéro de dépôt: **19790659.7**

(22) Date de dépôt: **17.09.2019**

(51) Classification Internationale des Brevets (IPC):
**B29C 48/35** (2019.01)    **B29C 48/21** (2019.01)
**B29C 48/49** (2019.01)    **B29C 48/88** (2019.01)
**B29C 48/14** (2019.01)    **B29C 48/07** (2019.01)
B29D 30/06 (2006.01)    B29K 7/00 (2006.01)
B29C 48/305 (2019.01)    B29C 48/87 (2019.01)

(52) Classification Coopérative des Brevets (CPC):
**B29C 48/21; B29C 48/07; B29C 48/142;
B29C 48/307; B29C 48/345; B29C 48/35;
B29C 48/355; B29C 48/49; B29C 48/87;**
B29C 48/885; B29C 48/914; B29D 30/06;
B29K 2007/00

(86) Numéro de dépôt international:
**PCT/FR2019/052164**

(87) Numéro de publication internationale:
**WO 2020/058625 (26.03.2020 Gazette 2020/13)**

(54) **MACHINE DE COEXTRUSION POUR MELANGES ELASTOMERIQUES ET PROCÉDÉ DE FABRICATION DE BANDE DE PROFILÉ**

KOEXTRUSIONSMASCHINE FÜR ELASTOMERE VERBINDUNGEN UND VERFAHREN ZUR HERSTELLUNG EINER PROFILELEMENTELEISTE

COEXTRUSION MACHINE FOR ELASTOMERIC COMPOUNDS, AND METHOD FOR MANUFACTURING A PROFILED ELEMENT STRIP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.09.2018 FR 1858522**

(43) Date de publication de la demande:
**28.07.2021 Bulletin 2021/30**

(73) Titulaire: **COMPAGNIE GENERALE DES ETABLISSEMENTS MICHELIN**
**63000 Clermont-Ferrand (FR)**

(72) Inventeurs:
• **OUGIER, Christophe**
  **63040 CLERMONT-FERRAND CEDEX 9 (FR)**
• **HINC, Henri**
  **63040 CLERMONT-FERRAND CEDEX 9 (FR)**
• **JAUNET, Nicolas**
  **63040 CLERMONT-FERRAND CEDEX 9 (FR)**
• **LETOCART, Arnaud**
  **63040 CLERMONT-FERRAND CEDEX 9 (FR)**

(74) Mandataire: **Redouté, Gilles Pierre**
  **M. F. P. Michelin**
  **Service juridique - Propriété Intellectuelle**
  **DCJ/PI - F35 - Site de Ladoux**
  **23, place des Carmes-Déchaux**
  **63040 Clermont-Ferrand Cedex 9 (FR)**

(56) Documents cités:
EP-A2- 0 139 604    WO-A1-2018/115797
DE-C1- 4 211 669    GB-A- 772 148
JP-A- H03 295 627    JP-A- 2004 216 725

**Description**

L'invention concerne le domaine de la fabrication de bandes de produits viscoélastiques coextrudés, tels des produits élastomériques destinés à la fabrication des pneumatiques. Plus particulièrement, elle concerne la fabrication de profilés complexes coextrudés à base de mélanges élastomériques destinés à la fabrication d'une bande de roulement ou d'un flanc de pneumatique.

De manière connue dans EP 0 139 604 A2 et GB 772 148 A par exemple, la fabrication des profilés complexes par extrusion d'au moins deux produits sous forme de bande à base de mélanges d'élastomériques réunis ensemble par coextrusion, fait appel à l'utilisation de plusieurs extrudeuses reliées à une tête d'extrusion commune. Chaque extrudeuse est formée d'un corps cylindrique ou fourreau fixe à l'intérieur duquel se trouve une vis coaxiale à l'axe longitudinal du fourreau et qui est entraînée en rotation autour de celui-ci. Elle a pour fonction d'homogénéiser un mélange caoutchouteux qui y est introduit sous forme de bande et de le pousser vers une filière de sortie. Pour un produit complexe, la filière de sortie reçoit plusieurs mélanges élastomériques de compositions identiques ou différentes et détermine le profil de la bande de profilé coextrudé. Ce profil est défini par une lame profilée fixe coopérant avec un rouleau rotatif ou avec une paroi fixe.

De nos jours, on fait de plus en plus appel à l'utilisation de produits complexes du type bande de profilé complexe réalisée à base de différents profilés individuels extrudés et superposés pour diminuer le nombre de poses successives de produits en assemblage, diminuer les coûts et améliorer la qualité du produit final. On préfère obtenir ces produits complexes par coextrusion car ce procédé assure une meilleure cohésion des différents composants entre eux.

La coextrusion permet de combiner plusieurs bandes extrudées en mélangés élastomériques en un seul produit co-extrudé dans une seule machine de coextrusion. Plusieurs extrudeuses son agencées ensemble autour d'une tête d'extrusion commune comportant des canaux d'écoulement du produit en direction d'une filière de sortie. Dans les machines de coextrusion de l'état de la technique, les extrudeuses la composant son agencées selon une disposition « en soufflet » ou autrement dit, elles sont disposées de manière à ce que les axes de rotation de leurs vis d'extrusion convergent vers la tête d'extrusion. Une telle disposition convergente induit des contraintes fortes dans les bandes de mélanges qui parcourent les canaux de transfert la tête d'extrusion. Or, de par le caractère visco-élastique des élastomères, d'importants phénomènes de retrait (en direction longitudinale de la bande) et de gonflement (en direction transversale de la bande) ont lieu après cette zone de convergence des canaux de transfert. Une bande de profilé co-extrudée peut ainsi se déformer après la sortie de la filière dans deux directions transverses, elle peut donc devenir en même temps plus épaisse et moins large ou vice-versa.

Pour remédier à ce problème, le document US 6 695 606 propose une solution qui consiste à utiliser un rouleau rotatif au voisinage de la filière de sortie de la tête d'extrusion. Le rouleau rotatif participe à l'écoulement du produit complexe obtenu après sortie de la filière en diminuant les contraintes internes, contraintes qui sont relâchées partiellement lorsque le produit complexe est encore collé sur le rouleau. Ces contraintes sont principalement des contraintes d'élongation qui résultent des diminutions des sections des canaux de la tête d'extrusion. Selon ce document, les canaux d'écoulement sont dimensionnés de manière à ce que la section de ces canaux puisse se transformer progressivement au fil de l'écoulement du matériau. Toutefois, mis à part une la complexité de la forme de la section et du dimensionnement de ces canaux, de par la convergence des canaux dans la tête d'extrusion, le problème des contraintes résiduelles dans le produit complexe co-extrude demeure.

Le document WO2018115797 au nom de la demanderesse décrit une machine de coextrusion comportant plusieurs extrudeuses disposées de part et d'autre d'une tête d'extrusion. La tête d'extrusion comporte des canaux de transfert vers une filière de sortie qui sont parallèles entre eux. Ainsi, la solution proposée dans ce document permet de remédier au problème des contraintes élongationnelles induites par la disposition « en soufflet » des extrudeuses de la machine. Toutefois, il a été constaté que des contraintes de gonflement étaient toujours présentes dans le produit obtenu en sortie de la filière.

Or, pour la fabrication de pneumatiques, dans un but d'optimisation des performances de ceux-ci, il est nécessaire d'utiliser des produits co-extrudés dont la géométrie soit très précise.

Le but de l'invention est de remédier aux problèmes précités.

L'invention propose une machine pour fabriquer par coextrusion une bande de profilé à base de plusieurs bandes extrudées en mélanges élastomériques, comprenant une tête d'extrusion comportant des canaux d'écoulement dont les orifices d'entrée sont reliées aux sorties d'au moins deux extrudeuses d'alimentation en bandes extrudées en mélanges élastomériques et dont les orifices de sortie débouchent dans une filière qui est adjacente à un rouleau et est réalisée de manière à coopérer avec celui-ci pour réaliser la mise en forme de la bande de profilé, ledit rouleau comportant un axe central entouré d'une surface externe destinée à recevoir la bande de profilé et des moyens d'entraînement en rotation du rouleau autour de son axe central, caractérisée en ce que les canaux d'écoulement sont parallèles entre eux et sont perpendiculaires à la direction circonférentielle du rouleau et en ce que la bande de profilé est solidaire de la surface de réception du rouleau sur une longueur équivalente d'au moins 700mm.

Une direction « radiale » est une direction qui suit la direction du rayon du rouleau. Une direction « axiale » est une direction parallèle à l'axe de rotation du rouleau. Une direction « circonférentielle » est une direction qui est perpendiculaire à la fois à un rayon du rouleau et à la direction axiale.

Selon l'invention, l'extrusion des différentes bandes en mélanges élastomériques se fait au moyen d'une tête d'extrusion commune à canaux d'écoulement parallèles entre eux et à l'aide d'une filière à rouleau, connue par ailleurs sous le nom de « nez à rouleau ». La filière est adjacente au rouleau et est réalisée de manière à coopérer avec celui-ci pour réaliser la mise en forme de la bande de profilé. On comprend que la filière est disposée de manière contiguë à la surface externe du rouleau et que la surface de la filière qui se trouve en face du rouleau comporte une surface cylindrique qui épouse la surface du rouleau. La surface cylindrique de la filière comporte à cette fin des orifices de formage qui communiquent avec les canaux d'écoulement de la tête d'extrusion et qui ont pour fonction de donner la forme aux différentes bandes en provenance de différents canaux et à les guider lors de leur application sur le rouleau de manière à former une bande de profilé coexdrudée unique avec la surface cylindrique du rouleau.

Plus particulièrement, les canaux d'écoulement qui amènent les mélanges vers la filière de sortie et donc vers le rouleau sont parallèles et perpendiculaires à la direction circonférentielle du rouleau. Ces canaux ne sont pas agencés de manière à converger en direction du rouleau, comme dans les documents de l'état de la technique, et, de ce fait, les contraintes appliquées au mélange sont moindres, lesdites contraintes étant dues principalement au passage via les orifices de la filière de sortie. Une telle extrusion au moyen d'un nez à rouleau permet de bloquer les deux dimensions (longueur et largeur) de la bande de profilé coextrudée dont la semelle colle à la surface de réception du nez à rouleau. De par le principe de conservation du volume, la troisième dimension qui est l'épaisseur de la bande reste constante. Afin de mieux relaxer les contraintes restantes, la bande de profilé coexdrudée doit rester sur le rouleau sur une longueur préétablie. Lors des tests effectués en laboratoire avec des bandes de roulement et des bandes de flanc de pneumatique, une longueur d'au moins 700mm a été jugée suffisante pour la relaxation des contraintes. On obtient de ce fait, une bande de profilé co-extrudée de géométrie très précise.

Par longueur équivalente on comprend la distance de contact entre la bande profilée coextrudée sortant de la filière et la surface de réception du rouleau. Par surface de réception du rouleau on comprend la partie du rouleau en contact avec la bande de profilé coextrudé, cette partie étant la surface externe du rouleau lorsqu'elle vient directement en contact avec la bande de profilé ou la surface externe d'une courroie entrainée par le rouleau et qui est interposée entre la surface externe du rouleau et la bande de profilé coextrudé.

Dans un premier mode de réalisation de l'invention, ledit rouleau ledit rouleau est cylindrique de diamètre supérieur ou égal à 0,6m.

De préférence, la machine comporte un premier système de refroidissement de sa surface externe du rouleau et un deuxième système de refroidissement des paliers de support du rouleau qui sont reliés à une unité de contrôle qui commande le fonctionnement des deux systèmes de refroidissement selon une même température de consigne.

Dans un deuxième mode de réalisation, la bande de profilé est solidaire de la surface de réception sur une distance égale à au moins ½ et de préférence à ¾ de la circonférence du rouleau avant d'être transférée sur un dispositif de transport.

Dans une variante de réalisation de l'invention, le rouleau est agencé au-dessus de la tête d'extrusion.

Dans une autre variante de réalisation de l'invention, le rouleau est agencé en-dessous de la tête d'extrusion.

De préférence, la machine comprend un cylindre de renvoi interposé entre le rouleau et un dispositif de transport de la bande de profilé.

Dans un troisième mode de réalisation, le rouleau entraîne une courroie sans fin interposée entre la filière et ledit rouleau de manière à ce que la filière coopère avec le rouleau pour la mise en forme de la bande de profilé moyennant ladite courroie.

De préférence, ladite courroie est métallique, elle est de préférence en acier inoxydable.

Le but de l'invention est également atteint avec un procédé de fabrication de bande de profilé à base de plusieurs mélanges d'élastomères par coextrusion à l'aide d'une machine comportant plusieurs extrudeuses, une tête d'extrusion et un rouleau de pose selon l'invention, caractérisé en ce que :

- on réalise la coextrusion d'une bande de profilé à l'aide d'une tête d'extrusion dont les canaux d'écoulement sont parallèles entre eux et sont perpendiculaires à la direction circonférentielle du rouleau de pose, la bande de profilé étant solidaire de la surface de réception du rouleau sur une longueur équivalente d'au moins 700mm;

- on transfère ensuite la bande de profilé ainsi obtenue à l'aide d'un dispositif de transfert.

L'invention sera mieux comprise grâce à la suite de la description, qui s'appuie sur les figures suivantes :

- la figure 1 est une vue schématique en coupe transversale de la machine de l'invention selon un premier et un deuxième mode de réalisation;

- la figure 2 est une vue schématique en coupe transversale de la machine selon un premier mode de réalisation;

- la figure 3 est une vue schématique en coupe transversale de la machine selon une variante du deuxième mode de réalisation;

- la figure 4 est une vue en schématique en coupe transversale de la machine selon un troisième mode de réalisation.

Sur les différentes figures, les éléments identiques ou similaires portent la même référence. Leur description n'est donc pas systématiquement reprise.

Les figures illustrent une machine 1 de coextrusion utilisée pour extruder des matériaux viscoélastiques du type des mélanges élastomériques pour former une bande de profilé 100 complexe, par exemple une bande de roulement ou un flanc de pneumatique. La machine 1 de coextrusion comprend une tête d'extrusion 2 connectée à plusieurs extrudeuses 10, 20, 30 et 40 dont chacune lui fournit un mélange élastomérique sous pression. Les mélanges élastomériques sous pression suivent des canaux d'écoulement qui parcourent la tête d'extrusion jusqu'à une filière de sortie 3.

Les extrudeuses 10, 20, 30, 40 ont été illustrées de manière schématique en représentant uniquement leurs vis respectives, mais on comprend que, de manière généralement connue, la vis de chaque extrudeuse tourne à l'intérieur d'un fourreau cylindrique muni d'une entrée d'alimentation en un mélange élastomérique, sous forme de bande de mélange, et d'une sortie qui débouche dans la tête d'extrusion 2 lorsque celle-ci est en place. La vis 12, 22, 32, 42 de chaque extrudeuse 10, 20, 30, 40 est entraînée en rotation autour de son axe longitudinal 11, 21, 31, 41 par un moteur, situé à l'extrémité de la vis opposée à celle qui arrive dans la tête d'extrusion, de manière à ce qu'elle tourne à l'intérieur de son fourreau respectif afin de fournir à la tête d'extrusion 2 un mélange élastomérique homogénéisé et prêt à être mis en forme par celle-ci.

Les extrudeuses 10, 20, 30, 40 sont agencés de part et d'autre de la tête d'extrusion 2 et de manière à ce que la sortie de chaque extrudeuse communique directement avec un conduit d'entrée de mélange dans la tête d'extrusion 2. Autrement dit la tête d'extrusion 2 est reliée directement aux extrudeuses 10, 20, 30, 40 sans qu'il y ait de canal de transfert de mélange élastomérique entre les deux. La tête d'extrusion 2 regroupe l'intégralité de l'outillage dimensionnel (canaux de transfert la connectant aux sorties des extrudeuses et filière d'extrusion) propre à un profilé donné en un seul ensemble monobloc monté amovible. En cas de changement de produit profilé, un tel ensemble monobloc est rapidement évacué et remplacé par un autre adapté au nouveau produit.

Les mélanges arrivent au niveau des orifices d'entrée 15, 25, 35, 45 dans la tête d'extrusion 2 qui comporte par ailleurs des canaux d'écoulement 2a, 2b, 2c, 2d assurant le transfert des mélanges en provenance des différentes extrudeuses à une filière de sortie 3. Les canaux d'écoulement 2a, 2b, 2c et 2d s'étendent dans une direction sensiblement perpendiculaire à celle des axes longitudinaux des extrudeuses 10, 20, 30, 40. Par sensiblement perpendiculaire on comprend un angle de 90° +/- 20°.

Dans une variante de l'invention, les extrudeuses 10, 20, 30, 40 sont agencées avec leurs axes longitudinaux 11, 21, 31, 41 parallèles entre eux et perpendiculaires aux plans des faces opposées de la tête d'extrusion qui forment des plans d'interface.

La machine 1 de coextrusion comprend également un rouleau 50 qui coopère en fonctionnement avec la filière 3. Le rouleau 50 présente une surface externe 52 cylindrique et il est monté rotatif autour d'un axe de rotation qui passe par le centre de symétrie O de sa section transversale. Un moteur électrique (non illustré sur les dessins) est prévu pour assurer son entraînement en rotation à une vitesse prédéterminée, via un motoréducteur et à l'aide des moyens de commande. La vitesse de rotation du rouleau est généralement comprise entre 4 et 25 m/min et elle est déterminée par la productivité de la machine. En fonctionnement, le rouleau 50 coopère avec la filière de sortie 3 et, en tournant amène la bande de profilé coextrudée 100 à un dispositif de transfert, telle une bande transporteuse 200.

Le rouleau 50 est rigide, il est de préférence réalisé en acier et dont la surface externe 52 est polie ayant une rugosité Ra<0,4.

Selon l'invention, les canaux d'écoulement 2a, 2b, 2c et 2d sont parallèles entre eux et sont perpendiculaires à la direction circonférentielle du rouleau 50 et la bande de profilé coextrudée avec la machine de l'invention est solidaire de la surface de réception sur une longueur équivalente d'au moins 700mm.

La longueur équivalente représente la distance de contact entre la bande profilée coextrudée sortant de la filière 3 et la surface externe 52 de réception du rouleau. La bande de profilé 100 coextrudée reste en contact avec le rouleau sur une distance 54 de longueur équivalente supérieure ou égale à 700 mm qui permet d'obtenir la relaxation de toutes les contraintes en sortie lorsqu'elle est transférée par une bande transporteuse 200 en direction d'un poste d'assemblage ou de stockage.

Les canaux d'écoulement 2a, 2b, 2c et 2d sont parallèles entre eux et sont perpendiculaires à la direction circonférentielle du rouleau 50, en étant agencés selon des plans verticaux parallèles à l'axe de rotation du rouleau. De préférence, le plan médian vertical parallèle aux canaux d'écoulement de la tête d'extrusion 2 contient l'axe de rotation du rouleau 50.

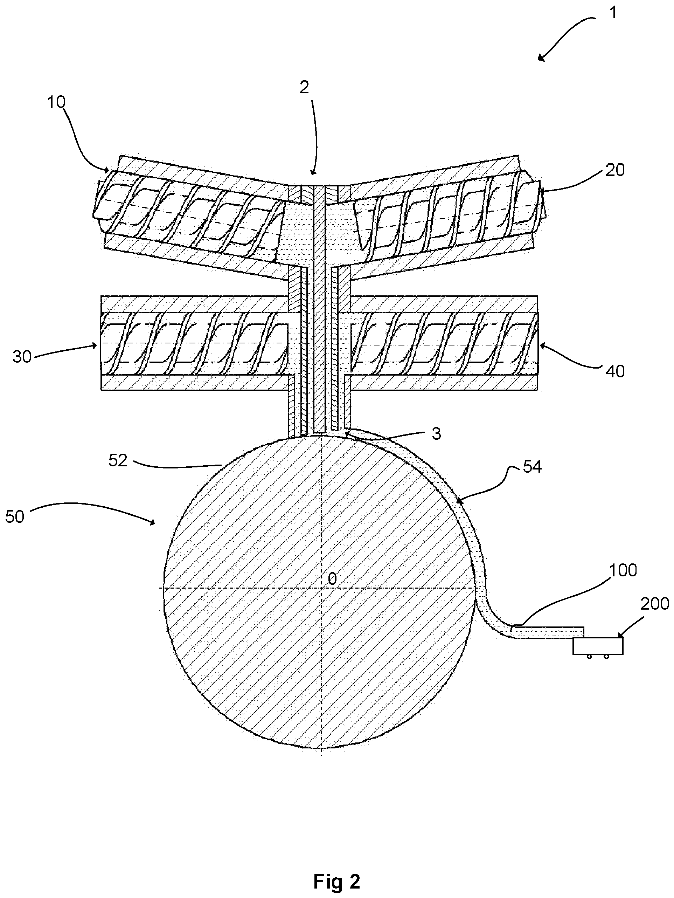

Dans un premier mode de réalisation de l'invention, tel que mieux visible à la figure 2, le diamètre du rouleau 50 ou diamètre externe est égal ou supérieur à 0,6m et il est de préférence compris entre 0,6m et 4m et encore plus préférentiellement entre 1 et 2,5m. Il a été constaté lors des tests effectués en laboratoire, que, un rouleau ayant un grand diamètre par rapport aux rouleaux des machines d'extrusion de l'état de la technique, qui sont généralement compris entre 200 et 500mm, permet à la bande de profilé coextrudé de rester plus longtemps sur le rouleau, tout en évitant de lui imprimer un rayon de courbure trop important.

Un tel rouleau rigide de grand diamètre nécessite une construction robuste du support et des paliers de rotation, ainsi qu'une bonne précision de positionnement du rouleau. De préférence, le rouleau comporte un premier système de refroidissement de sa surface externe 52, par exemple sous forme d'un circuit d'eau régulé en température, qui permet de refroidir la bande de profilé 100, et un deuxième système de refroidissement de ses paliers de support (non illustrés sur les dessins). Il est avantageux que le système de refroidissement de la surface externe 52 et celui des paliers de support du rouleau soient refroidis à la même température afin d'éviter des phénomènes de dilatation différentielle entre les deux et obtenir une stabilité dimensionnelle de l'ensemble en fonctionnement. Le circuit de refroidissement est relié à une unité de contrôle qui commande le système de refroidissement selon une même température de consigne.

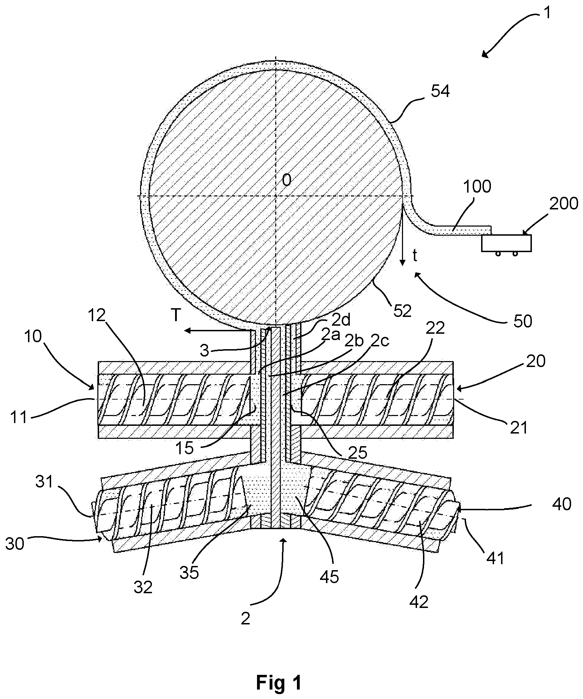

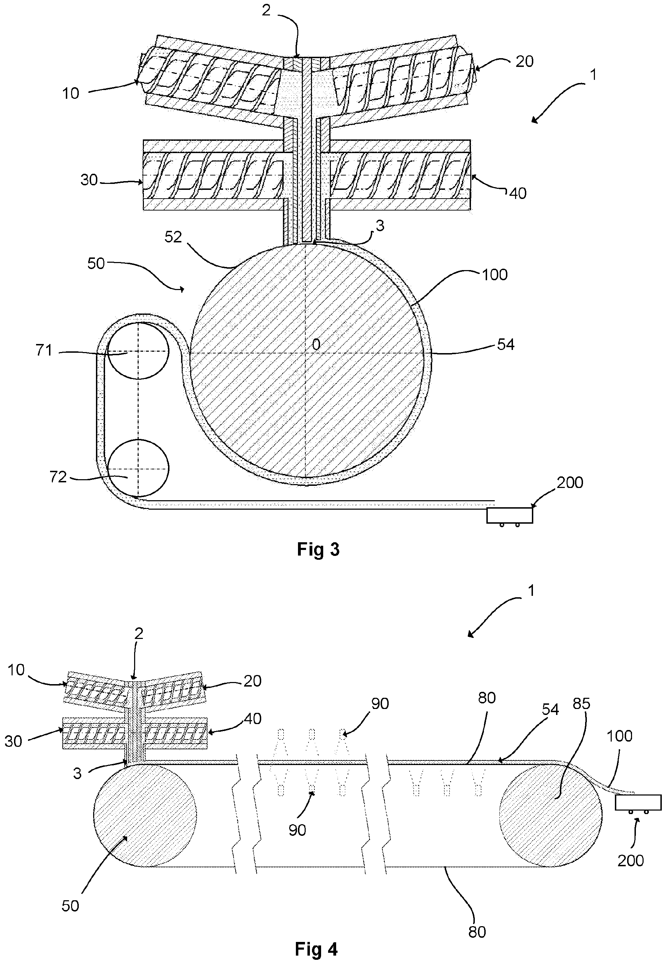

Dans un deuxième mode de fonctionnement, tel que mieux visible aux figures 1 et 3, la bande de profilé 100 est solidaire de la surface externe 52 du rouleau 50 sur une distance égale à au moins ½ et de préférence sur ¾ de la circonférence du rouleau 50 avant d'être transférée sur un dispositif de transport de bande.

Ainsi, avantageusement, la bande de profilé coextrudé reste embarrée sur au moins 180° ou de préférence 270° de la circonférence du rouleau. L'embarrage sur ¾ de tour de la périphérie du rouleau est déterminant pour les produits qui manquent de collant avec la surface externe du rouleau. Pour obtenir une adhérence sur le rouleau et donc la relaxation des contraintes avec une géométrie maitrisée, la tension à appliquer sur le produit en sortie de rouleau doit être faible afin d'éviter la déformation du produit.

Un embarrage sur ¾ de tour de la périphérie du rouleau permet d'avoir une telle tension sur le produit en sortie faible. Ainsi, les calculs effectués avec la formule

$$T/t = \exp(f.alpha),$$

où

T est la traction produite en sortie du nez à rouleau (qui donne les contraintes de retrait),

t est la tension en sortie de rouleau que l'on souhaite la plus faible possible afin de ne pas déformer la bande,

f est coefficient de frottement et

alpha est l'angle d'embarrage du produit sur le rouleau (l'angle d'embarrage valant 90 degrés, soient Pi/2 rad, pour un quart de tour, respectivement 180 degrés, soient Pi rad, pour un demi-tour, et 270 degrés, soient 1,5xPi rad, pour trois-quarts de tour)

reflètent ce résultat (où dans les cellules du tableau ci-dessous on retrouve le rapport T/t) :

| | | f=0.5 | f=1 |
|---|---|---|---|
| | | | |
| 1/4 tour | | 2 | 5 |
| 1/2 tour | | 5 | 23 |
| 3/4 tour | | 11 | 111 |

Ainsi, avec un tel embarrage sur ¾ de la périphérie du rouleau 50 la bande de profilé 100 est entraînée principalement par le frottement avec la surface du rouleau et non pas par la tension en sortie.

Dans la variante de la figure 1, le rouleau 50 est disposé au-dessus de l'ensemble formé par les extrudeuses 10, 20, 30, 40 et la tête d'extrusion 2 que l'on appellera dans ce qui suit « outillage ». Ceci permet de conserver une évacuation de la bande de profilé coextrudé 100 avec la « semelle » (partie plate) orientée en direction de la surface du tapis de la bande transporteuse 200.

Dans la variante de la figure 3, pour des considérations d'accessibilité et d'ergonomie, le rouleau 50 est disposé au-dessous de l'outillage. Cela nécessite d'effectuer des renvois d'angle pour remettre la bande de profilé coextrudé 100 dans le sens optimal pour le transport sur les tapis d'évacuation. Des rouleaux de renvoi 71 et 72 sont prévus à cet effet entre le rouleau 50 et la bande transporteuse 200.

Lorsque l'on utilise un rouleau de diamètre égal ou supérieur à 1m dans le deuxième mode de réalisation, il a été constaté qu'un embarrage du produit coextrudé sur une distance angulaire comprise entre 180° et 210° de la surface externe 52 du rouleau donne de très bons résultats en matière de relaxation des contraintes.

Dans un troisième mode de réalisation et tel que mieux visible à la figure 4, le rouleau 50 entraîne une courroie sans fin 80 interposée entre la filière 3 et ledit rouleau de manière à ce que la filière 3 coopère avec le rouleau 50 pour la mise en forme de la bande de profilé moyennant ladite courroie.

Pour s'affranchir des problématiques de construction d'un rouleau 50 de grand diamètre, il est avantageux d'installer une courroie qui permet de garder en position la bande de profilé coextrudé beaucoup plus longtemps et ainsi maximiser la relaxation des contraintes. Une telle courroie 80 est installée entre deux rouleaux un premier rouleau moteur constitué par le rouleau 50 du nez à rouleau et un deuxième rouleau 85 monté libre en rotation. Dans une variante de réalisation, les rouleaux 50 et 85 ont un diamètre d'environ 300mm.

Pour garantir une durée de vie optimale de la courroie 80, elle est de préférence en inox.

La maitrise de la vitesse de la corroie est essentielle pour obtenir la géométrie désirée de la bande de profilé coextrudé 100. Pour éviter le glissement entre la courroie 80 métallique et le rouleau 50, il est avantageux de disposer sur la surface externe du rouleau des zones revêtues d'un matériau adhérant (caoutchouc par exemple).

Un dispositif de refroidissement 90 de la courroie 80 peut être prévu. Ce dispositif de refroidissement 90 peut comporter, de manière connue, des buses de pulvérisation d'un liquide de refroidissement situées au-dessus et/ ou en dessous de la courroie 80.

La bande de profilé coextrudé 100 quitte la courroie 80 au niveau du deuxième rouleau 85 et elle est évacuée par une bande transporteuse 200 en direction d'un autre poste de l'atelier de confection de pneumatiques.

Dans les figures annexées illustrant la machine de l'invention, toutes les extrudeuses 10, 20, 30, 40 de l'installation 1 sont des extrudeuses à vis d'Archimède. Dans une autre variante de l'invention, au moins l'une des extrudeuses de l'installation 1 est une extrudeuse volumétrique, par exemple du type extrudeuses volumétriques bi-vis contrarotatives à filets interpénétrés et profils conjugués du type décrit dans la demande de brevet WO2017/109419 au nom de la demanderesse. Par ailleurs, on peut utiliser d'autres types d'extrudeuses volumétriques, par exemple du type à pompes à engrenages ou à pompes à pistons.

D'autres variantes et modes de réalisation de l'invention peuvent être envisagés sans sortir du cadre de ses revendications. Ainsi une combinaison des modes de réalisation peut être envisagée, par exemple on peut utiliser un rouleau 50 du premier mode de réalisation dans les deuxième et troisième modes de réalisation.

**Revendications**

1. Machine (1) pour fabriquer par coextrusion une bande de profilé (100) à base de plusieurs bandes extrudées en mélanges élastomériques, comprenant une tête d'extrusion (2) comportant des canaux d'écoulement (2a, 2b, 2c, 2d) dont les orifices d'entrée sont reliées aux sorties d'au moins deux extrudeuses (10, 20, 30, 40) d'alimentation en bandes extrudées en mélanges élastomériques et dont les orifices de sortie débouchent dans une filière (3) qui est adjacente à un rouleau (50) et est réalisée de manière à coopérer avec celui-ci pour réaliser la mise en forme de la bande de profilé (100), le rouleau (50) comportant un axe central entouré d'une surface externe (52) destinée à recevoir la bande de profilé (100) et des moyens d'entraînement en rotation du rouleau autour de son axe central, **caractérisée en ce que** les canaux d'écoulement (2a, 2b, 2c, 2d) sont parallèles entre eux et sont perpendiculaires à la direction circonférentielle du rouleau (50) et **en ce que** la bande de profilé (100) est solidaire de la surface de réception du rouleau sur une longueur équivalente d'au moins 700mm.

2. Machine selon la revendication 1, **caractérisée en ce que** la surface externe (52) dudit rouleau (50) est cylindrique de diamètre supérieur ou égal à 0,6m.

3. Machine selon l'une des revendications précédentes, **caractérisée en ce qu'**elle comporte un premier système de refroidissement de la surface externe (52) du rouleau (50) et un deuxième système de refroidissement des paliers de support du rouleau (50) qui sont reliés à une unité de contrôle qui commande le fonctionnement des deux systèmes de refroidissement selon une même température de consigne.

4. Machine selon l'une des revendications précédentes, **caractérisée en ce que** la bande de profilé (100) est solidaire de la surface externe (52) du rouleau (50) sur une distance égale à au moins ½ et de préférence à ¾ de la circonférence du rouleau (50) avant d'être transférée sur un dispositif de transport.

5. Machine selon l'une des revendications précédentes, **caractérisée en ce que** le rouleau (50) est agencé au-dessus de la tête d'extrusion (2).

6. Machine selon l'une des revendications 1 à 4, **caractérisée en ce que** le rouleau (50) est agencé en-dessous de la tête d'extrusion (2).

7. Machine selon la revendication 6, **caractérisée en ce qu'**elle comprend un rouleau de renvoi (71, 72) interposé entre le rouleau et un dispositif de transport de la bande de profilé.

8. Machine selon l'une des revendications 1 à 3, **caractérisée en ce que** le rouleau (50) entraîne une courroie sans fin (80) interposée entre la filière (3) et ledit rouleau de manière à ce que la filière (3) coopère avec le rouleau (50) pour la mise en forme de la bande de profilé moyennant ladite courroie.

9. Machine selon la revendication 8, **caractérisée en ce que** ladite courroie (80) est métallique, elle est de préférence en acier inoxydable.

10. Procédé de fabrication de bande de profilé (100) à base de plusieurs mélanges d'élastomères par coextrusion à l'aide d'une machine comportant plusieurs extrudeuses (10, 20, 30, 40), une tête d'extrusion (2) et un rouleau (50) selon l'une des revendications précédentes, **caractérisé en ce que** :

   - on réalise la coextrusion d'une bande de profilé à l'aide d'une tête d'extrusion dont les canaux d'écoulement (2a, 2b, 2c, 2d) de la tête d'extrusion (2) sont parallèles entre eux et sont perpendiculaires à la direction circonférentielle du rouleau (50), la bande de profilé étant solidaire de la surface de réception du rouleau sur une longueur équivalente d'au moins 700mm;
- on transfère ensuite la bande de profilé ainsi obtenue à l'aide d'un dispositif de transfert.

**Patentansprüche**

1. Maschine (1) zur Herstellung eines Profilstreifens (100) durch Koextrusion auf der Basis mehrerer extrudierter Streifen aus Elastomermischungen, welche einen Extrusionskopf (2) umfasst, der Strömungskanäle (2a, 2b, 2c, 2d) aufweist, deren Eintrittsöffnungen mit den Ausgängen von mindestens zwei Extrudern (10, 20, 30, 40) zur Zuführung von extrudierten Streifen aus Elastomermischungen verbunden sind und deren Austrittsöffnungen in eine Düse (3) münden, welche einer Walze (50) benachbart ist und dafür ausgebildet ist, mit dieser zusammenzuwirken, um das Formen des Profilstreifens (100) durchzuführen, wobei die Walze (50) eine Mittelachse, die von einer Außenfläche (52) umgeben ist, die dazu bestimmt ist, den Profilstreifen (100) aufzunehmen, und Mittel zum Drehantrieb der Walze um ihre Mittelachse aufweist, **dadurch gekennzeichnet, dass** die Strömungskanäle (2a, 2b, 2c, 2d) zueinander parallel sind und senkrecht zur Umfangsrichtung der Walze (50) sind, und dadurch, dass der Profilstreifen (100) mit der Aufnahmefläche der Walze auf einer äquivalenten Länge von mindestens 700 mm fest verbunden ist.

2. Maschine nach Anspruch 1, **dadurch gekennzeichnet, dass** die Außenfläche (52) der Walze (50) zylindrisch ist, mit einem Durchmesser, der größer oder gleich 0,6 m ist.

3. Maschine nach einem der vorhergehenden Ansprüche, **dadurch gekennzeichnet, dass** sie ein erstes Kühlsystem für die Außenfläche (52) der Walze (50) und ein zweites Kühlsystem für die Traglager der Walze (50) aufweist, welche mit einer Steuereinheit verbunden sind, die den Betrieb der zwei Kühlsysteme anhand ein und derselben Solltemperatur steuert.

4. Maschine nach einem der vorhergehenden Ansprüche, **dadurch gekennzeichnet, dass** der Profilstreifen (100) mit der Außenfläche (52) der Walze (50) auf einer Länge, die mindestens gleich ½ und vorzugsweise ¾ des Umfangs der Walze (50) beträgt, fest verbunden ist, bevor er auf eine Transportvorrichtung übertragen wird.

5. Maschine nach einem der vorhergehenden Ansprüche, **dadurch gekennzeichnet, dass** die Walze (50) oberhalb des Extrusionskopfes (2) angeordnet ist.

6. Maschine nach einem der Ansprüche 1 bis 4, **dadurch gekennzeichnet, dass** die Walze (50) unterhalb des Extrusionskopfes (2) angeordnet ist.

7. Maschine nach Anspruch 6, **dadurch gekennzeichnet, dass** sie eine Umlenkwalze (71, 72) umfasst, die zwischen der Walze und einer Transportvorrichtung für den Profilstreifen angeordnet ist.

8. Maschine nach einem der Ansprüche 1 bis 3, **dadurch gekennzeichnet, dass** die Walze (50) einen Endlosriemen (80) antreibt, der zwischen der Düse (3) und der Walze angeordnet ist, derart, dass die Düse (3) mit der Walze (50) für das Formen des Profilstreifens mittels dieses Riemens zusammenwirkt.

9. Maschine nach Anspruch 8, **dadurch gekennzeichnet, dass** der Riemen (80) metallisch ist und dass er vorzugsweise aus Edelstahl besteht.

10. Verfahren zur Herstellung eines Profilstreifens (100) auf der Basis mehrerer Elastomermischungen durch Koextrusion mithilfe einer mehrere Extruder (10, 20, 30, 40), einen Extrusionskopf (2) und eine Walze (50) aufweisenden Maschine nach einem der vorhergehenden Ansprüche, **dadurch gekennzeichnet, dass:**

    - die Koextrusion eines Profilstreifens mithilfe eines Extrusionskopfes durchgeführt wird, dessen Strömungskanäle (2a, 2b, 2c, 2d) des Extrusionskopfes (2) zueinander parallel sind und senkrecht zur Umfangsrichtung der Walze (50) sind, wobei der Profilstreifen mit der Aufnahmefläche der Walze auf einer äquivalenten Länge von mindestens 700 mm fest verbunden ist;
    - anschließend der so erhaltene Profilstreifen mithilfe einer Transfervorrichtung übertragen wird.

**Claims**

1. Machine (1) for manufacturing, by coextrusion, a profiled element strip (100) based on a plurality of extruded strips made of elastomeric compounds, comprising an extrusion head (2) having flow ducts (2a, 2b, 2c, 2d), the inlet orifices of which are connected to the outlets of at least two extruders (10, 20, 30, 40) for supplying extruded strips made of elastomeric compounds, and the outlet orifices of which lead into a die (3) which is adjacent to a roller (50) and is designed to cooperate with the latter to shape the profiled element strip (100), the roller (50) having a central axis surrounded by an external surface (52) intended to receive the profiled element strip (100) and means for driving the roller in rotation about its central axis, **characterized in that** the flow ducts (2a, 2b, 2c, 2d) are mutually parallel and are perpendicular to the circumferential direction of the roller (50), and the profiled element strip (100) is joined to the receiving surface of the roller along an equivalent length of at least 700 mm.

2. Machine according to Claim 1, **characterized in that** the external surface (52) of said roller (50) is cylindrical with a diameter greater than or equal to 0.6 m.

3. Machine according to any of the preceding claims, **characterized in that** it comprises a first cooling system for the external surface (52) of the roller (50), and a second cooling system for the support bearings of the roller (50), that are connected to a control unit which controls the operation of the two cooling systems according to a same setpoint temperature.

4. Machine according to any of the preceding claims, **characterized in that** the profiled element strip (100) is joined to the external surface (52) of the roller (50) along a distance equal to at least 1/2 and preferably 3/4 of the circumference of the roller (50) before being transferred to a transport device.

5. Machine according to any of the preceding claims, **characterized in that** the roller (50) is arranged above the extrusion head (2).

6. Machine according to any of Claims 1 to 4, **characterized in that** the roller (50) is arranged below the extrusion head (2).

7. Machine according to Claim 6, **characterized in that** it comprises a deflecting roller (71, 72) interposed between the roller and a transport device for the profiled element strip.

8. Machine according to any of Claims 1 to 3, **characterized in that** the roller (50) drives an endless belt (80) interposed between the die (3) and said roller, such that the die (3) cooperates with the roller (50) for shaping the profiled element strip by means of said belt.

9. Machine according to Claim 8, **characterized in that** said belt (80) is made of metal, preferably stainless steel.

10. Method for manufacturing, by coextrusion, a profiled element strip (100) based on a plurality of elastomeric compounds, using a machine comprising a plurality of extruders (10, 20, 30, 40), an extrusion head (2) and a roller (50) according to any of the preceding claims, **characterized in that**:

    - a profiled element strip is coextruded using an extrusion head in which the flow ducts (2a, 2b, 2c, 2d) of the extrusion head (2) are mutually parallel and are perpendicular to the circumferential direction of the roller (50), and the profiled element strip is joined to the receiving surface of the roller along an equivalent length of at least 700 mm;
- then the resulting profiled element strip is transferred by means of a transfer device.

**Fig 1**

**Fig 2**

**Fig 3**

**Fig 4**

## RÉFÉRENCES CITÉES DANS LA DESCRIPTION

**Documents brevets cités dans la description**

- EP 0139604 A2
- GB 772148 A
- US 6695606 B
- WO 2018115797 A
- WO 2017109419 A